# FASCICULE DE BREVET EUROPEEN

(11) **EP 0 625 849 B1**
(45) Date de publication et mention de la délivrance du brevet: **26.08.1998**
(21) Numéro de dépôt: 94410035.3
(22) Date de dépôt: 16.05.1994
(51) Int. Cl.: H04N 5/16

(54) **Dispositif d'ajustement du niveau du noir d'un signal vidéo**
Schaltungsanordnung zum Einstellen des Schwarzwertes eines Videosignals
Black level setting device for a video signal

(30) Priorité: 19.05.1993 FR 9306250
(43) Date de publication de la demande: 23.11.1994
(73) Titulaire: SGS-THOMSON MICROELECTRONICS S.A., 94250 Gentilly (FR)
(72) Inventeur: Meunier, Thierry, F-38340 Pommiers la Placette (FR)
(74) Mandataire: de Beaumont, Michel

(56) Documents cités:
- EP-A- 0 064 316
- GB-A- 668 197
- PATENT ABSTRACTS OF JAPAN vol. 12, no. 7 (E-571) 9 Janvier 1988 & JP-A-62 165 482 (YOKOGAWA ELECTRIC) 22 Juillet 1987

## Description

La présente invention concerne le traitement de signaux vidéo et en particulier l'ajustement du niveau du noir d'un signal vidéo sur un niveau de référenoe.

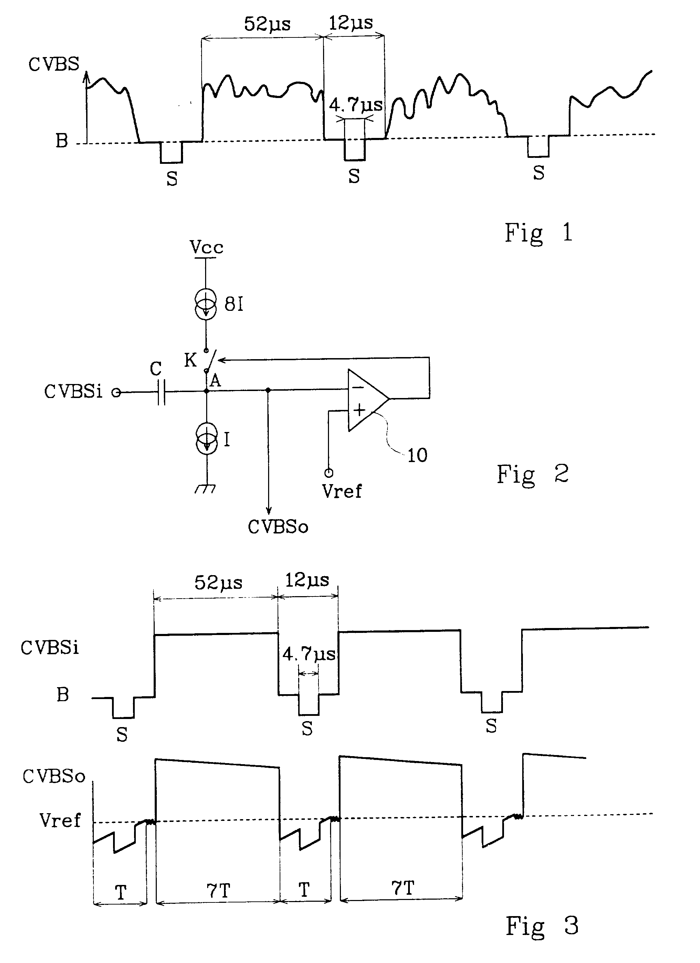

La figure 1 représente très schématiquement une portion de signal vidéo CVBS. Ce signal comprend, en dessous d'un niveau de référenoe B, dit niveau du noir, des impulsions S de synchronisation de ligne se succédant périodiquement. Entre deux impulsions S, on a d'abord un niveau constant égal à B, ensuite une partie de signal active, véhiculant des informations de ligne, et enfin encore un niveau constant égal à B. Chaque partie active du signal vidéo dure environ 52 microsecondes et la partie inactive, correspondant au restant de la période, dure environ 12 microsecondes. Les impulsions de synchronisation durent environ 4,7 microsecondes.

Dans les appareils recevant un tel signal vidéo, tels que les téléviseurs, on cherche, pour exploiter le signal vidéo correctement, à ajuster le niveau du noir B sur un niveau de référence prédéterminé. Ceci est nécessaire, par exemple, pour ajuster sur une même référence les niveaux du noir de plusieurs signaux vidéo à commuter sur un canal, ou pour extraire du signal vidéo les impulsions de synchronisation S qui servent de référence à une boucle à verrouillage de phase (PLL). Ce PLL sert, en particulier, à synchroniser le balayage de l'écran sur les impulsions S.

La figure 2 représente un schéma de principe d'un dispositif classique très répandu, dit I/8I ou I/7I, servant à ajuster le niveau du noir d'un signal vidéo sur une tension de référence Vref. Un tel dispositif est aussi décrit dans EP-A-0 064 316. Le signal vidéo à ajuster CVBSi est appliqué sur une première borne d'une capacité C. La deuxième borne, A, de la capacité C est reliée à un potentiel bas, tel que la masse, par une source de courant I et à un potentiel haut Vcc par une source de courant 81 commandée par un interrupteur K. La borne A est également reliée à l'entrée inverseuse d'un comparateur 10 dont l'entrée non-inverseuse reçoit une tension de référence Vref. Le comparateur 10 commande l'interrupteur K. Le signal vidéo ajusté, CVBSo, est prélevé sur la borne A.

Lorsque le signal CVBSo dépasse la tension Vref, l'interrupteur K est ouvert et la capacité C est déchargée par un courant constant I. Lorsque le signal CVBSo est en dessous de la tension Vref, l'interrupteur K est fermé et la capacité C est chargée sous un courant constant 71. Les termes "charger" et "décharger" sont utilisés pour indiquer que l'on tire le potentiel de la borne A vers le potentiel haut Vcc et vers la masse, respectivement, ce qui ne correspond pas forcément à des charges ou décharges effectives de la capacité C.

Avec cette configuration, le signal CVBSo tend vers un état d'équilibre où la durée de sa partie supérieure à Vref, ci-après "alternance positive", est 7 fois plus grande que la durée de sa partie inférieure à Vref, ci-après "alternance négative". En d'autres termes, le rapport des durées des alternances positives et négatives du signal CVBSo tend vers le rapport des courants de charge et de décharge.

Si l'on observe de nouveau la figure 1 et que l'on suppose que le niveau du noir B est légèrement inférieur à Vref, le signal présente des alternances positives de 52 microsecondes et des alternances négatives de 12 microsecondes. Le rapport de ces durées est de 4,3. Si l'on suppose maintenant que le niveau du noir B est légèrement supérieur à la tension Vref, le signal présente des alternances positives de 59,3 microsecondes et des alternances négatives de 4,7 microsecondes. Le rapport des durées est alors égal à 12,6. On constate, lorsque le niveau du noir B varie autour de la valeur de référence Vref, que les rapports de durée passent brusquement de 4,3 à 12,6.

En choisissant une valeur quelconque, comprise entre 4,3 et 12,6, du rapport entre le courant de charge et le courant de décharge de la capacité C (en l'occurence 7), le niveau du noir B finit toujours par s'ajuster sur la tension Vref.

La figure 3 montre de manière plus précise le fonctionnement du dispositif de la figure 2. Pour simplifier les explications, cette figure 3 représente un signal CVBSi à ajuster présentant une partie active à niveau constant. Le signal ajusté CVBSo correspondant est représenté en régime établi. Chaque alternance positive du signal CVBSo présente, par rapport à la partie correspondante du signal CVBSi, une pente négative. Cette pente correspond à la décharge de la capacité C par un courant I (l'interrupteur K est ouvert). Chaque alternance négative du signal CVBSo présente, par contre, une pente positive 7 fois plus importante que celle des alternances positives. Cette pente correspond à la charge de la capacité C par un courant 7I (l'interrupteur K est fermé).

Chaque alternance négative se termine avant le début de la partie active suivante, mais dure plus longtemps qu'une impulsion de synchronisation S. Pendant l'intervalle de transition, le signal CVBSo oscille autour de la valeur Vref. En conséquence, si les pentes sont considérées faibles, le niveau du noir du signal CVBSo est ajusté sur la valeur Vref.

Si le rapport des courants de charge et de décharge était choisi inférieur à 4,3, ce serait, dans le cas de la figure 3, la valeur haute de la partie active du signal CVBSo qui serait ajustée sur la valeur Vref. Dans le cas extrême opposé, si le rapport des courants était supérieur à 12,6, ce seraient les fonds des impulsions de synchronisation qui seraient ajustés sur la valeur Vref.

Comme cela est représenté de manière exagérée, le signal ajusté CVBSo présente des parties inclinées là où ces parties devraient être horizontales. En pratique, on choisit les valeurs de la capacité C et du courant I pour que l'erreur maximale soit de l'ordre de 10 mV pour une amplitude maximale de 700 mV de la partie active du signal. Ce choix résulte d'un compromis entre rapidité d'ajustement du signal et erreur tolérée.

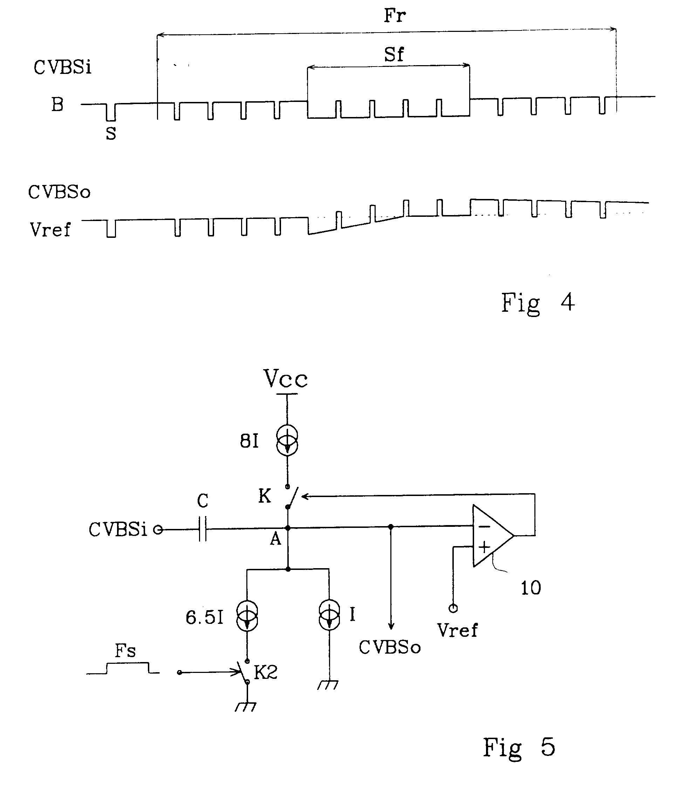

La figure 4 représente une portion de signal vidéo CVBSi à ajuster, correspondant à un retour trame Fr. Le signal CVBSo ajusté correspondant est également représenté. Au voisinage d'un retour trame, un signal vidéo présente une partie active à amplitude nulle. Le retour trame comprend des impulsions se succédant à une fréquence double de celle des impulsions S. Dans la partie centrale du retour trame, correspondant à un train d'impulsions de synchronisation de trame Sf, les impulsions s'élargissent de sorte que le rapport cyclique du signal est proche de 0, alors que le rapport cyclique par ailleurs est proche de 1.

Comme cela est représenté par l'allure du signal ajusté CVBSo, le doublement de fréquence au début du retour trame ne perturbe pas l'ajustement du niveau du noir (le rapport des courants de charge et de décharge est adapté au rapport cyclique proche de 1 du signal). Par contre, pendant le train d'impulsions Sf, le rapport des courants de charge et de décharge n'est plus adapté au rapport cyclique proche de 0 du signal. Le signal CVBSo se décale progressivement vers le haut jusqu'à ce que sa valeur minimale soit ajustée sur la tension Vref. A la fin du train d'impulsions Sf, le rapport des courants de charge et de décharge est de nouveau adapté au rapport cyclique du signal qui se décale progressivement vers le bas pour rejoindre son état initial. Toutefois, le rattrapage de l'état initial est particulièrement lent et dure plusieurs lignes après le retour trame. Les impulsions de synchronisation des premières lignes de la trame sont trop décalées vers le haut pour que l'on puisse les détecter.

Un inconvénient de ce décalage est que le PLL ajusté par les impulsions de synchronisation est démarré avec un certain retard. Cet inconvénient est particulièrement grave lorsque le signal vidéo est fourni par un magnétoscope, car les impulsions de synchronisation ne se succèdent alors pas de manière parfaitement périodique et que le PLL doit alors réagir le plus rapidement possible pour se réajuster sur ces impulsions de synchronisation, ce qui est incompatible avec un démmarrage en retard du PLL. Il en résulte une déformation visible du début de l'image affichée sur l'écran. Dans le cas d'un signal vidéo normalisé, cet inconvénient est moins grave car les impulsions de synchronisation sont en phase avec la fréquence de repos du PLL.

Un autre inconvénient de ce décalage est que les informations des premières lignes sont inexploitables. En général, les premières lignes ne véhiculent pas d'informations d'image, mais elles peuvent véhiculer des informations de télétexte qui risquent alors d'être corrompues.

Un objet de la présente invention est de prévoir un dispositif d'ajustage du niveau du noir d'un signal vidéo du type I/8I qui provoque un décalage réduit, voire nul, du signal vidéo lors des retours trame.

Pour atteindre cet objet, l'invention prévoit de réduire le rapport des courants de charge et de décharge au voisinage d'un train d'impulsions de synchronisation de trame.

La présente invention vise plus particulièrement un dispositif d'ajustement d'un signal vidéo de manière que son niveau du noir coïncide avec un niveau de référence prédéterminé, comprenant une capacité dont une première borne reçoit le signal vidéo et dont la deuxième borne fournit le signal vidéo ajusté, et des moyens pour décharger la capacité sous un courant constant lorsque le signal vidéo ajusté dépasse le niveau de référence et pour charger la capacité sous un courant constant lorsque le signal vidéo ajusté est en-dessous du niveau de référence, le rapport des courants de charge et de décharge étant compris entre 4,3 et 12,6. Selon l'invention, le dispositif comprend des moyens pour réduire significativement ledit rapport de courants au moins pendant une partie d'un train d'impulsions de synchronisation de trame.

Selon un mode de réalisation de la présente invention, lesdits moyens rendent le rapport de courants inférieur à 1/13 pendant un train d'impulsions de synchronisation de trame.

Selon un mode de réalisation de la présente invention, le dispositif comprend une source de courant de charge reliant la deuxième borne de la capacité à un potentiel haut, et une source de courant de décharge reliant la deuxième borne de la capacité à un potentiel bas, la source de courant de charge étant commandée par un comparateur recevant le signal sur la deuxième borne de la capacité et une tension de référence.

Selon un mode de réalisation de la présente invention, le dispositif comprend une source de courant supplémentaire reliée en parallèle sur la source de courant de décharge, commandée par un signal actif pendant un train d'impulsions de synchronisation de trame, le courant de cette source supplémentaire étant proche du courant fourni par la source de charge.

Ces objets, caractéristiques et avantages ainsi que d'autres de la présente invention seront exposés en détail dans la description suivante de modes de réalisation particuliers faite en relation avec les figures jointes parmi lesquelles :
la figure 1, précédemment décrite, représente une portion de signal vidéo ;
la figure 2 représente un dispositif classique, dit I/8I, permettant d'ajuster le niveau du noir d'un signal vidéo sur une tension de référence ;
la figure 3 représente des signaux vidéo d'entrée et de sortie du dispositif de la figure 2 ;
la figure 4 représente des signaux vidéo d'entrée et de sortie du circuit de la figure 2 lors d'un retour trame ;
la figure 5 représente un mode de réalisation de dispositif d'ajustement du niveau du noir d'un signal vidéo selon la présente invention ; et
la figure 6 représente un mode de réalisation détaillé du dispositif de la figure 5.

A la figure 5, des éléments identiques à ceux de la figure 2 sont désignés par des mêmes références.

La présente invention propose, pour diminuer, voire supprimer, le décalage du signal vidéo se produisant lors d'un retour trame, de diminuer notablement le rapport des courants de charge et de décharge de la capacité C pendant les trains d'impulsions Sf de synchronisation de trame. Pour cela, idéalement, le rapport des courants de charge et de décharge pendant un train d'impulsions Sf est choisi inférieur au rapport des durées des niveaux hauts et des niveaux bas du train d'impulsions. En l'occurence, ce rapport de durées est de l'ordre de 1/13.

Dans ce cas, lors d'un train d'impulsions de synchronisation de trame, le signal vidéo continue à être ajusté de manière que le niveau haut de ce train d'impulsions, qui correspond au niveau du noir, coïncide avec la valeur Vref.

Un choix du rapport des courants de charge et de décharge non inférieur à 1/13, mais par exemple compris entre 1/13 et 1/7 entrainerait que le signal vidéo se décale vers le haut, mais de façon négligeable. Dans ce cas, la réduction du rapport de courants est de préférence maintenue au-delà du train d'impulsions Sf, ce qui accélère le retour du signal vers son état initial.

Bien entendu, la réduction du rapport de courants peut intervenir pendant toute la durée du retour trame Fr, ou sur une partie seulement du train d'impulsions Sf.

Dans le mode de réalisation de la présente invention représenté en figure 5, une source de courant 6,5I est reliée en parallèle sur la source de courant I. La source 6,5I est mise en fonction par un interrupteur K2 commandé par un signal Fs qui est actif pendant les trains d'impulsions Sf de synchronisation de trame.

Avec cette configuration, en dehors des trains d'impulsions Sf, le dispositif fonctionne comme le dispositif classique de la figure 2. Pendant un train d'impulsions Sf, le courant de charge de la capacité C devient 8I-7,5I = I/2 et le courant de décharge 7,5 I. Le rapport des courants de charge et de décharge est alors de 1/15.

Le signal de commande de l'interrupteur K2 peut être obtenu de nombreuses manières que l'homme du métier saura trouver. Par exemple, on peut prévoir un compteur, comme cela est prévu classiquement pour générer un signal d'effacement pendant la durée d'un retour trame, qui compte un nombre adéquat d'impulsions de synchronisation pendant qu'une sortie commandant l'interrupteur K2 est à l'état inactif, et qui compte ensuite les impulsions du train d'impulsions de synchronisation de trame tandis que cette sortie est à l'état actif. On peut également prévoir une bascule monostable initialisée à chaque impulsion de synchronisation et qui passe à un état actif si la largeur de l'impulsion de synchronisation dépasse, par exemple, 5 micro-secondes.

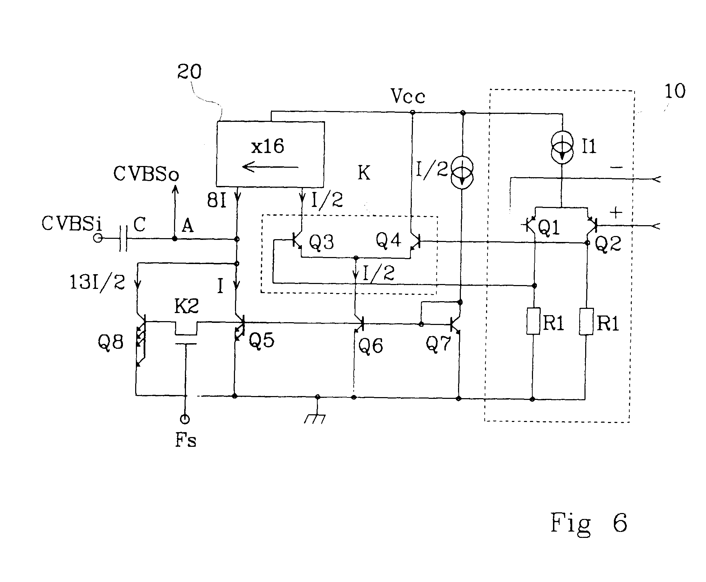

La figure 6 représente un mode de réalisation détaillé du circuit de la figure 5. Le comparateur 10 comprend un étage différentiel à transistors PNP Q1 et Q2 qui commande un étage différentiel à transistors NPN Q3 et Q4. Les collecteurs des transistors Q1 et Q2 sont chargés par des résistances respectives R1 et l'étage Q1/Q2 est polarisé par une source I1. L'étage Q3/Q4 joue le rôle de l'interrupteur K. Le collecteur du transistor Q3 est relié à l'entrée d'un miroir de courant 20 présentant un coefficient multiplicateur de 16. La sortie de ce miroir de courant est reliée à la borne A de la capacité C. La borne A est reliée à la masse par un transistor NPN Q5 et les émetteurs des transistors Q3 et Q4 sont reliés à la masse par un transistor Q6. Les transistors Q5 et Q6 forment deux transistors de sortie d'un miroir de courant dont le transistor d'entrée est un transistor NPN.Q7 connecté en diode à la masse. Une source de courant fournit un courant I/2 au collecteur du transistor Q7. Le transistor Q6 a la même surface d'émetteur que le transistor Q7. Le transistor Q5 a une surface d'émetteur double. Ainsi, on retrouve un courant I/2 dans le collecteur du transistor Q6 et un courant I dans le collecteur du transistor Q5, qui est en permanence tiré sur la borne A.

Dans un premier état du comparateur 10, représenté, tout le courant de collecteur du transistor Q6 passe dans le transistor Q3. On retrouve à l'entrée du miroir 20 un courant I/2 qui est multiplié par 16 avant d'être appliqué par la sortie du miroir 20 sur la borne A. La capacité C est chargée.

Dans un deuxième état du comparateur 10, tout le courant de collecteur du transistor Q6 passe dans le transistor Q4. Alors, le miroir 20 ne fournit aucun courant à la borne A. La capacité C est déchargée.

Selon l'invention, il est prévu un transistor Q8, à surface d'émetteur 13 fois plus importante que celle des transistors Q6 et Q7, relié en parallèle sur le transistor Q5. La base du transistor Q8 est reliée à la base du transistor Q5 par un transistor MOS jouant le rôle de l'interrupteur K2. La grille du transistor MOS K2 est commandée par le signal Fs qui est actif pendant les trains d'impulsions de synchronisation de trame. Lorsque le transistor K2 est rendu conducteur par le signal Fs, le transistor Q8 devient un troisième transistor de sortie du miroir Q5/Q6/Q7 et son courant de collecteur devient égal à 13I/2, soit 6,5I.

De nombreuses variantes et modifications de la présente invention apparaîtront à l'homme du métier, notamment en ce qui concerne les diverses manières de diminuer le rapport des courants de charge et de décharge de la capacité C pendant les trains d'impulsions de synchronisation de trame. Les exemples représentés (source de courant en parallèle sur la source de décharge I) ont l'avantage d'être particulièrement simples.

## Revendications

1. Dispositif d'ajustement d'un signal vidéo de manière que son niveau du noir coïncide avec un niveau de référence prédéterminé (Vref), comprenant une capacité (C) dont une première borne reçoit le signal vidéo (CVBSi) et dont la deuxième borne (A) fournit le signal vidéo ajusté (CVBSo), et des moyens (10 K) pour décharger la capacité sous un courant constant (I) lorsque le signal vidéo ajusté dépasse le niveau de référence et pour charger la capacité sous un courant constant (8I) lorsque le signal vidéo ajusté est en-dessous du niveau de référence, le rapport des courants de charge et de décharge étant compris entre 4,3 et 12,6, caractérisé en ce qu'il comprend des moyens (K2) pour réduire significativement ledit rapport de courants au moins pendant une partie d'un train d'impulsions de synchronisation de trame (Sf).

2. Dispositif selon la revendication 1, caractérisé en ce que lesdits moyens rendent le rapport de courants inférieur à 1/13 pendant un train d'impulsions de synchronisation de trame (Sf).

3. Dispositif selon la revendication 1, caractérisé en ce qu'il comprend une source de courant de charge (8I) reliant la deuxième borne (A) de la capacité (C) à un potentiel haut (Vcc), et une source de courant de décharge (I) reliant la deuxième borne de la capacité à un potentiel bas, la source de courant de charge étant commandée par un comparateur (10) recevant le signal sur la deuxième borne de la capacité et une tension de référence (Vref).

4. Dispositif selon la revendication 2, caractérisé en ce qu'il comprend une source de courant supplémentaire (6,5I) reliée en parallèle sur la source de courant de décharge (I), commandée par un signal actif (Fs) pendant un train d'impulsions de synchronisation de trame, le courant de cette source supplémentaire étant proche du courant fourni par la source de charge.

## Patentansprüche

1. Anordnung zum Einstellen eines Videosignals derart, daß sein Schwarzwert mit einem vorgegebenen Bezugspegel (Vref) zusammenfällt, die Anordnung umfassend eine Kapazität bzw. einen Kondensator (C), der an einem ersten Anschluß das Videosignal (CVBSi) zugeführt erhält und an seinem zweiten Anschluß (A) das eingestellte Videosignal (CVBSo) abgibt, sowie Mittel (10, K) zum Entladen des Kondensators mit einem konstanten Strom (I), wenn das eingestellte Videosignal den Bezugspegel übersteigt, und zum Laden des Kondensators mit einem konstanten Strom (8I), wenn das eingestellte Videosignal unterhalb dem Bezugspegel liegt, wobei das Verhältnis der Lade- und Entladeströme im Bereich zwischen 4,3 und 12,6 liegt,
**dadurch gekennzeichnet**
daß die Anordnung Mittel (K2) umfaßt, um das genannte Verhältnis der Ströme wenigstens während einem Teil einer Folge von Bildsynchronimpulsen (Sf) signifikant herabzusetzen.

2. Anordnung nach Anspruch 1, dadurch gekennzeichnet, daß die genannten Mittel das Stromverhältnis während einer Bildsynchronimpulsfolge (Sf) kleiner als 1/13 machen.

3. Anordnung nach Anspruch 1, dadurch gekennzeichnet, daß sie eine Ladestromquelle (8I), welche den zweiten Anschluß (A) des Kondensators (C) mit einem hohen Potential (Vcc) verbindet, sowie eine Entladestromquelle (I) aufweist, welche den zweiten Anschluß des Kondensators mit einem niedrigen Potential verbindet, wobei die Ladestromquelle durch einen Komparator (10) gesteuert wird, dem das am zweiten Anschluß des Kondensators anliegende Signal und eine Bezugsspannung (Vref) zugeführt wird.

4. Anordnung nach Anspruch 2, dadurch gekennzeichnet, daß sie eine parallel zur Entladestromquelle (I) angeschlossene zusätzliche Stromquelle (6,5I) aufweist, die durch ein während einer Bildsynchronimpulsfolge aktives Signal (Fs) gesteuert wird, wobei der Strom dieser zusätzlichen Stromquelle einen dem von der Ladestromquelle gelieferten Strom benachbarten Wert zbesitzt.

## Claims

1. A device for adjusting a video signal so that its black level is in coincidence with a predetermined reference level (Vref), including a capacitor (C) having a first terminal that receives the video signal (CVBSi) and a second terminal (A) that provides the adjusted video signal (CVBSo), and means (10K), for discharging the capacitor (C) at a constant current (I) when the adjusted video signal exceeds the reference level, and for charging said capacitor at a constant current (8I) when the adjusted video signal is below the reference level, the ratio between the charging and discharging currents ranging from 4.3 to 12.6, characterized in that it comprises means (K2) for significantly reducing said current ratio at least during a portion of a frame synchronization pulse train (Sf).

2. The device of claim 1, wherein said means decrease the current ratio below 1/13 during the occurrence of a frame synchronization pulse train (Sf).

3. The device of claim 1, including a charging current source (8I) connecting the second terminal (A) of capacitor (C) to a high potential (Vcc), a discharging current source (I) connecting the second terminal (A) of capacitor (C) to a low potential, and a comparator (10) controlling the charging current source and receiving the signal at the second terminal (A) of said capacitor (C) and a reference voltage (Vref).

4. The device of claim 2, including an additional current source (6.5I) that is connected in parallel with the discharging current source (I), controlled by an active signal (Fs) during the occurrence of a frame synchronization pulse train, the current of said additional source being approximately equal to the current provided by the charging current source.
